# EUROPEAN PATENT APPLICATION

(11) **EP 4 790 823 A1**
(43) Date of publication of application: **12.08.2026**
(21) Application number: 24874641.4
(22) Date of filing: 02.10.2024
(51) Int. Cl.: H01M 50/533, H01G 11/78, H01M 10/04, H01M 10/058, H01M 50/103, H01M 50/15, H01M 50/166, H01M 50/54, H01M 50/545, H01M 50/548, H01M 50/553

(54) **POWER STORAGE DEVICE, LID MEMBER, AND METHOD FOR MANUFACTURING POWER STORAGE DEVICE**

(30) Priority: 02.10.2023 JP 2023171705
(71) Applicant: Dai Nippon Printing Co., Ltd., Tokyo 162-8001 (JP)
(72) Inventor: KANAZAWA, Sayako, Tokyo 162-8001 (JP); MIYASHIRO, Kae, Tokyo 162-8001 (JP); SASAKI, Miho, Tokyo 162-8001 (JP); URIU, Toshibumi, Tokyo 162-8001 (JP)
(74) Representative: Müller-Boré & Partner Patentanwälte PartG mbB
(86) International application number: PCT/JP2024/035275
(87) International publication number: WO 2025/075040

(57) **Abstract**

This power storage device includes an electrode member including a current collector, an exterior film wrapping the electrode member, and a lid member including a metal material and sealing the electrode member together with the exterior film. The lid member includes a lid body, and a joining part that protrudes from the lid body toward the electrode member and that is joined to the current collector.

## Description

### Technical Field

The present invention relates to an electrical storage device, a lid, and a method for manufacturing an electrical storage device.

### Background Art

PTL 1 discloses an example of an electrical storage device. The electrical storage device includes an electrode assembly including a current collector, an outer packaging that seals the electrode assembly, and an electrode terminal connected to the current collector. The outer packaging includes an outer package film wrapping the electrode assembly and a lid joined to the outer package film. The electrode terminal is inserted into a through-hole formed in the lid. An end part of the current collector is joined to the electrode terminal.

### Citation List

### Patent Literature

PTL 1: Japanese Patent Laid-open Publication No. 2022-123686

### Summary of Invention

### Technical Problem

In the electrical storage device, in order to simplify the configuration, it is conceivable that the lid is formed from metal, and the lid and the current collector are joined by, for example, ultrasonic joining. In the electrical storage device, there is a possibility that an arrangement space of an apparatus for joining the lid and the current collector cannot be easily secured. Therefore, there is a possibility that a joining failure between the lid and the current collector occurs.

An object of the present invention is to provide an electrical storage device in which a lid and a current collector are suitably joined, a lid that is used for the electrical storage device, and a method for manufacturing the electrical storage device.

### Solution to Problem

An electrical storage device according to a first aspect of the present invention includes: an electrode assembly including a current collector; an outer package film that wraps the electrode assembly; and a lid that is configured to contain a conductive material and seals the electrode assembly together with the outer package film. The lid includes: a lid main body; and a joining part that protrudes from the lid main body toward the electrode assembly and is joined to the current collector.

An electrical storage device according to a second aspect of the present invention is the electrical storage device according to the first aspect, in which the lid main body is joined to the outer package film.

An electrical storage device according to a third aspect of the present invention is the electrical storage device according to the first aspect or the second aspect, in which an end part of the joining part on a side opposite to the lid main body is separated from the outer package film.

An electrical storage device according to a fourth aspect of the present invention is the electrical storage device according to any one of the first aspect to the third aspect, in which the joining part includes: a first part that is connected to the lid main body and extends in a first direction toward the electrode assembly; and a second part that is connected to the first part and extends in a second direction intersecting the first direction in side view of the lid.

A lid according to a fifth aspect of the present invention is a lid used as an outer packaging of an electrical storage device, the lid including: a lid main body; and a joining part that protrudes from the lid main body and is connected to a current collector of the electrical storage device.

The lid according to a sixth aspect of the present invention is the lid according to the fifth aspect, in which the joining part includes: a first part that is connected to the lid main body and extends in a first direction toward an electrode assembly of the electrical storage device; and a second part that is connected to the first part and extends in a second direction intersecting the first direction in side view of the lid.

A manufacturing of an electrical storage device according to a seventh aspect of the present invention is a method for manufacturing an electrical storage device, the electrical storage device including: an electrode assembly including a current collector; an outer package film that wraps the electrode assembly; and a lid that is configured to contain a conductive material and seals the electrode assembly together with the outer package film, the lid including: a lid main body; and a joining part that protrudes from the lid main body toward the electrode assembly and is joined to the current collector. The method for manufacturing an electrical storage device includes a step of joining the joining part and the current collector.

### Advantageous Effects of Invention

According to the electrical storage device, the lid, and the method for manufacturing an electrical storage device according to the present invention, a lid and a current collector can be suitably joined.

### Brief Description of Drawings

[Fig. 1A] Fig. 1A is a perspective view of an electrical storage device according to an embodiment.
[Fig. 1B] Fig. 1B is a view relating to a method for measuring a sealing strength of a second seal portion of the electrical storage device of Fig. 1.
[Fig. 2] Fig. 2 is a sectional view illustrating a layer configuration of an outer package film of the electrical storage device of Fig. 1.
[Fig. 3] Fig. 3 is a view in which the outer package film of the electrical storage device of Fig. 1 is unfolded.
[Fig. 4] Fig. 4 is a perspective view of a lid included in the electrical storage device of Fig. 1.
[Fig. 5] Fig. 5 is a sectional view taken along line D5-D5 in Fig. 1A.
[Fig. 6] Fig. 6 is a sectional view taken along line D6-D6 in Fig. 1A.
[Fig. 7] Fig. 7 is a flowchart illustrating an example of a method for manufacturing the electrical storage device of Fig. 1.
[Fig. 8] Fig. 8 is a diagram relating to a second step in the method for manufacturing an electrical storage device.
[Fig. 9] Fig. 9 is a perspective view of a lid included in an electrical storage device of a first modification.
[Fig. 10] Fig. 10 is a sectional view of an electrical storage device of a second modification.
[Fig. 11] Fig. 11 is a sectional view of an electrical storage device of a third modification.

### Description of Embodiments

Hereinafter, an electrical storage device according to an embodiment of the present invention will be described with reference to the drawings. Note that, in this specification, a numerical range indicated by the term "A to B" means "A or more" and "B or less". For example, the expression of "2 to 15 mm" means 2 mm or more and 15 mm or less.

### [Embodiments]

### <1-1. Configuration of electrical storage device>

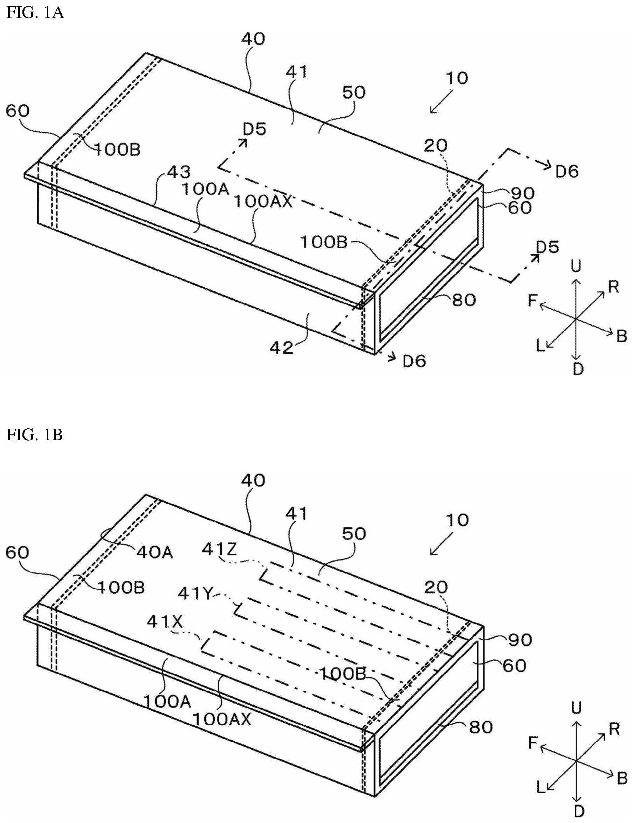

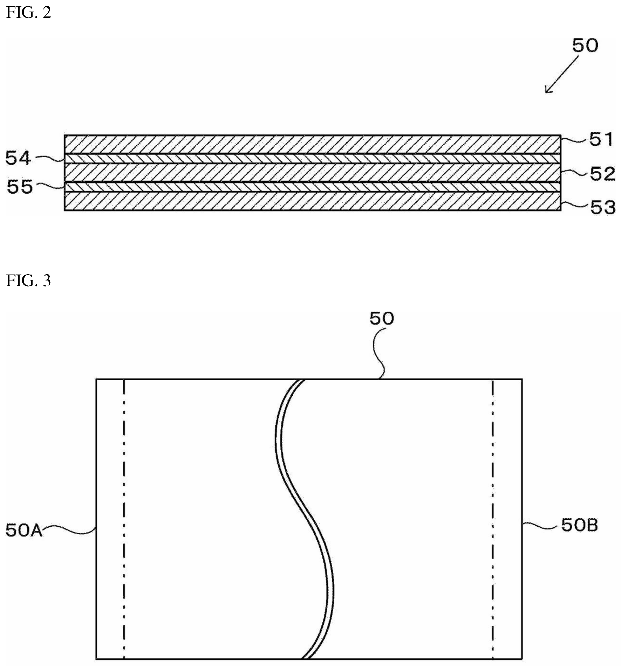

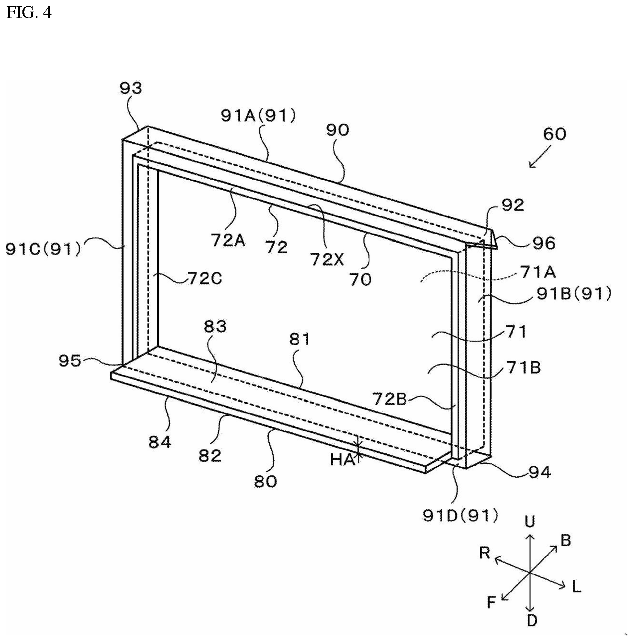

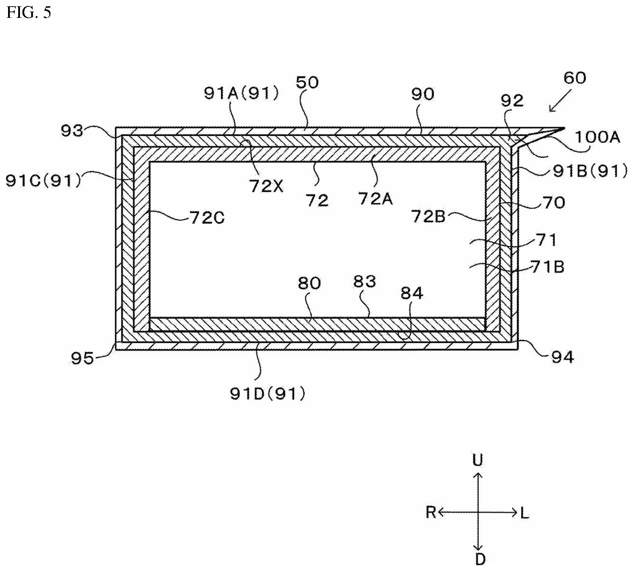

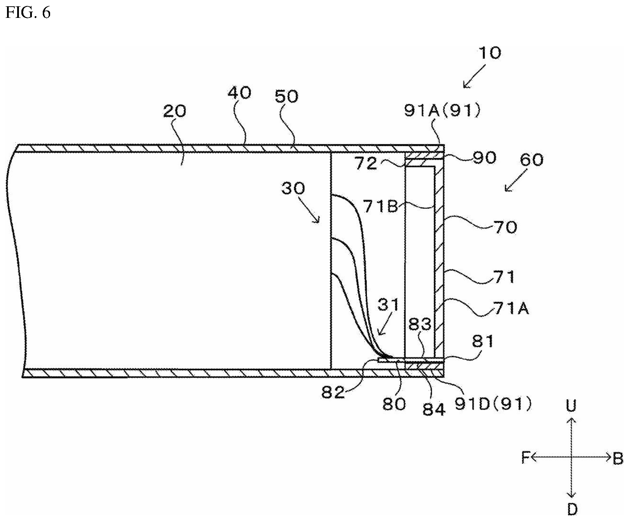

Fig. 1A is a plan view schematically illustrating an electrical storage device 10 of an embodiment. Fig. 1B is a view relating to a method for measuring a sealing strength of a second seal portion 100B of the electrical storage device 10 in Fig. 1A. Fig. 2 is a sectional view illustrating a layer configuration of an outer package film 50 included in the electrical storage device 10 in Fig. 1A. Fig. 3 is a view in which the outer package film 50 included in the electrical storage device 10 of Fig. 1A is unfolded. Fig. 4 is a perspective view of a lid 60 included in the electrical storage device 10 in Fig. 1A. Fig. 5 is a sectional view taken along line D5-D5 in Fig. 1A. Fig. 6 is a sectional view taken along line D6-D6 in Fig. 1A. Note that in Fig. 1A, the direction along the arrow UD indicates a thickness direction of the electrical storage device 10, the direction along the arrow LR indicates a width direction of the electrical storage device 10, and the direction along the arrow FB indicates a depth direction of the electrical storage device 10. The direction indicated by each of arrows UD, LR, and FB is also shared across the subsequent drawings.

The electrical storage device 10 includes an electrode assembly 20 including a current collector 30, and an outer packaging 40. The electrode assembly 20 includes: for example, a lithium ion battery; a capacitor; an all-solid-state battery; a semi-solid-state battery; a pseudo-solid-state battery; a polymer battery; an all-polymer battery; a lead storage battery; a nickel-hydrogen storage battery; a nickel-cadmium storage battery; a nickel-iron storage battery; a nickel-zinc storage battery; a silver oxide-zinc storage battery; a metal-air battery; a polyvalent cation battery; or electrodes (positive electrode and negative electrode) constituting an electrical storage member such as a capacitor; a separator; and the like. In the present embodiment, the shape of the electrode assembly 20 is a substantially cuboid. Note that the "substantially cuboid" includes a perfect cuboid and also a solid that can be seen as a cuboid by modifying the shape of a part of the outer surface thereof, for example. The shape of the electrode assembly 20 may be, for example, a cylinder or a polygonal column.

One end part 31 of the current collector 30 (see Fig. 6) is connected to the lid 60.

The outer packaging 40 seals the electrode assembly 20. The outer packaging 40 includes the outer package film 50 and the lid 60. The outer package film 50 wraps the electrode assembly 20. In the present embodiment, the outer package film 50 is wound around the electrode assembly 20. The lid 60 is disposed on a side of the electrode assembly 20 in the FB direction. In another example, the electrode assembly 20 may be housed inside the outer package film 50 configured into a tubular shape such that the opening parts are formed at both end parts in the FB direction, and the opening part may be closed by the lid 60. In still another example, the electrode assembly 20 in a state of being connected to the lid 60 may be housed inside the outer package film 50 configured into a tubular shape such that the opening parts are formed, and the opening part may be closed by the lid 60.

For example, there is a method in which a housing portion (recess) for housing the electrode assembly 20 is formed in the outer package film 50 through cold molding. However, it is not always easy to form a deep housing portion by such a method. When an attempt is made to form a deep (for example, 15 mm in terms of molding depth) accommodating portion (recess) by cold molding, pinholes or cracks are generated in the outer package film 50, leading to a rise in possibility that battery performance is degraded. On the other hand, since the outer packaging 40 seals the electrode assembly 20 by winding the outer package film 50 around the electrode assembly 20, the electrode assembly 20 can be easily sealed regardless of the thickness of the electrode assembly 20. Note that, for reducing a dead space between the electrode assembly 20 and the outer package film 50 in order to improve the volume energy density of the electrical storage device 10, it is preferable that the outer package film 50 is wound in a state of being in contact with the outer surface of the electrode assembly 20. In an all-solid-state battery, it is necessary to eliminate the space between the electrode assembly 20 and the outer package film 50 from the viewpoint that it is necessary to uniformly apply a high pressure from the outer surface of the battery for exhibiting battery performance, and therefore, the state where the outer package film 50 is in contact with and is wound around the outer surface of the electrode assembly 20 is preferable.

As illustrated in Fig. 2, the outer package film 50 is, for example, a laminate (laminate film) including a base material layer 51, a barrier layer 52, and a heat-sealable resin layer 53 in the stated order. Note that the outer package film 50 is not required to include all these layers, and may be free of, for example, the barrier layer 52. In other words, the outer package film 50 is only required to be formed from a material that is flexible and easy to bend, and the outer package film 50 may be formed from, for example, a resin film. Note that the outer package film 50 is preferably heat-sealable. In the outer package film 50, the innermost layer and the outermost layer may be the heat-sealable resin layers 53. In this case, the outer package film 50 may wrap the electrode assembly 20 and the lid 60 by joining the outermost layer and the innermost layer.

The outer package film 50 may include a laminate including at least the barrier layer 52 and the heat-sealable resin layer 53 in the stated order. In this laminate, the base material layer 51 is a layer provided as necessary, the side of the barrier layer 52 opposite to the heat-sealable resin layer 53 side is the outermost layer side, and the heat-sealable resin layer 53 is the innermost layer.

The entire thickness of the outer package film 50 can be arbitrarily selected. From the viewpoint of strength, the thickness of the outer package film 50 is preferably 50 µm or more. From the viewpoint of moldability or followability, the thickness of the outer package film 50 is preferably 1200 µm or less. The thickness of the outer package film 50 is preferably in the range of 50 µm or more and 1200 µm or less.

The base material layer 51 included in the outer package film 50 is a layer for imparting heat resistance to the outer package film 50 to suppress generation of pinholes which may occur during processing or distribution. The base material layer 51 includes, for example, at least one layer of a stretched polyester resin layer and a stretched polyamide resin layer. For example, by the base material layer 51 including at least one layer of a stretched polyester resin layer and a stretched polyamide resin layer, the barrier layer 52 can be protected during processing of the outer package film 50 to suppress breakage of the outer package film 50. From the viewpoint of increasing the tensile elongation of the outer package film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. Note that the base material layer 51 may include both a stretched polyester resin layer and a stretched polyamide resin layer. From the viewpoint of film strength, the thickness of the base material layer 51 is, for example, preferably 5 to 300 µm, more preferably 5 to 150 µm.

The barrier layer 52 is a layer which suppresses at least ingress of moisture. The barrier layer 52 is joined to, for example, the base material layer 51 with an adhesive layer 54 interposed therebetween. Examples of the barrier layer 52 include metal foils, deposited films, and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 52 may be provided. Preferably, the barrier layer 52 includes a layer formed from a metal material. Specific examples of the metal material constituting the barrier layer 52 include aluminum alloys, stainless steel, titanium steel and steel sheets, and in a case where the metal material is used as a metal foil, it is preferable that the metal material includes at least one of an aluminum alloy foil and a stainless steel foil.

In the barrier layer 52, the layer formed from the metal material described above may contain a recycled metal material. Examples of the recycled metal material include recycled materials of an aluminum alloy, stainless steel, titanium steel, and a steel plate. These recycled materials can be each obtained by a known method. The recycled material of the aluminum alloy can be obtained by, for example, a manufacturing method described in International Publication No. WO 2022/092231. The barrier layer 52 may be formed only from a recycled material, or may be formed from a mixed material of a recycled material and a virgin material. Note that the recycled metal material is a metal material obtained by, for example, collecting, isolating and purifying various products used in a so-called commercial market, wastes from manufacturing processes, and the like, such that the material can be reused. The virgin material from a metal material is a new metal material obtained by refining a metal natural resource (raw material), which is not a recycled material.

The aluminum alloy foil is more preferably a soft aluminum alloy foil formed from, for example, an annealed aluminum alloy from the viewpoint of improving the moldability or followability of the outer package film 50, and is preferably an aluminum alloy foil containing iron from the viewpoint of further improving the moldability or the followability. In the aluminum alloy foil containing iron (100 mass%), the content of iron is preferably 0.1 to 9.0 mass%, more preferably 0.5 to 2.0 mass%. By the content of iron being 0.1 mass% or more, it is possible to obtain the outer package film 50 having more excellent moldability. By the content of iron being 9.0 mass% or less, it is possible to obtain the outer package film 50 having more excellent flexibility. If necessary, silicon, magnesium, copper, manganese or the like may be added to the aluminum alloy foil. Softening can be performed by annealing or the like. From the viewpoint of improving mechanical strength of the outer package film 50, the aluminum alloy foil is more preferably a hard aluminum alloy foil formed from, for example, a work-hardened aluminum alloy. Examples of the hard aluminum alloy foil include aluminum alloy foils having a composition specified in JIS H4160: 1994 A8021H-H18, JIS H4160: 1994 A8079H-H18, JIS H4000: 2014 A8021P-H14, or JIS H4000: 2014 A8079P-H14. From the viewpoint of improving the mechanical strength of the outer package film 50, the aluminum alloy foil is preferably an aluminum alloy foil containing magnesium. In the aluminum alloy foil containing magnesium (100 mass%), the content of magnesium is preferably 0.2 to 5.6 mass%, and more preferably 0.2 to 3.0 mass%. Examples of the aluminum alloy foil containing magnesium include aluminum alloy foils having a composition specified in JIS H4000:2017 A5005P-O, JIS H4000:2017 A5050P-O, and JIS H4000:2017 A5052P-O.

Examples of the stainless steel foil include austenitic stainless steel foils, ferritic stainless steel foils, austenitic/ferritic stainless steel foils, martensitic stainless steel foils, and precipitation-hardened stainless steel foils. From the viewpoint of providing the outer package film 50 having further excellent moldability, it is preferable that the stainless steel foil is formed from austenitic stainless steel.

Specific examples of the austenitic stainless steel constituting the stainless steel foil include SUS304, SUS301, and SUS316L, and among these, SUS304 is especially preferable.

In a case where the barrier layer 52 is a metal foil, it is only necessary for the barrier layer 52 to exhibit a function as a barrier layer suppressing at least ingress of moisture, and the barrier layer 52 has a thickness of, for example, about 5 to 1000 µm. The thickness of the barrier layer 52 is preferably about 85 µm or less, more preferably about 50 µm or less, still more preferably about 40 µm or less, particularly preferably about 35 µm or less. Also, the thickness of the barrier layer 52 is preferably about 9.0 µm or more, more preferably about 20 µm or more, still more preferably about 25 µm or more. The thickness of the barrier layer 52 is preferably in the range of about 9.0 to 1000 µm, about 9.0 to 1000 µm, about 9.0 to 1000 µm, about 9.0 to 1000 µm, about 9.0 to 85 µm, about 9.0 to 50 µm, about 9.0 to 40 µm, about 9.0 to 35 µm, about 20 to 85 µm, about 20 to 50 µm, about 20 to 40 µm, about 20 to 35 µm, about 25 to 85 µm, about 25 to 50 µm, about 25 to 40 µm, or about 25 to 35 µm. In a case where the barrier layer 52 is formed from an aluminum alloy foil, the thickness thereof is especially preferably in above-described range. From the viewpoint of imparting high moldability and high rigidity to the outer package film 50, the thickness of the barrier layer 52 is preferably about 35 µm or more, more preferably about 45 µm or more, still more preferably about 50 µm or more, still more preferably about 55 µm or more, and preferably about 200 µm or less, more preferably about 85 µm or less, still more preferably about 75 µm or less, still more preferably about 70 µm or less, and is preferably in the range of about 35 to 200 µm, about 35 to 85 µm, about 35 to 75 µm, about 35 to 70 µm, about 45 to 200 µm, about 45 to 85 µm, about 45 to 75 µm, about 45 to 70 µm, about 50 to 200 µm, about 50 to 85 µm, about 50 to 75 µm, about 50 to 70 µm, about 55 to 200 µm, about 55 to 85 µm, about 55 to 75 µm, or about 55 to 70 µm. By the outer package film 50 having high moldability, deep drawing molding can be facilitated, which contributes to an increase in capacity of the electrical storage device. Although the weight of the electrical storage device increases when the capacity of the electrical storage device is increased, enhancement of the rigidity of the outer package film 50 can contribute to high sealing performance of the electrical storage device. In particular, in a case where the barrier layer 52 is formed from a stainless steel foil, the thickness of the stainless steel foil is preferably about 60 µm or less, more preferably about 50 µm or less, still more preferably about 40 µm or less, still more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 to 60 µm, about 10 to 50 µm, about 10 to 40 µm, about 10 to 30 µm, about 10 to 25 µm, about 15 to 60 µm, about 15 to 50 µm, about 15 to 40 µm, about 15 to 30 µm, or about 15 to 25 µm.

In a case where the barrier layer 52 is an aluminum foil, it is preferable that a corrosion-resistant film is provided at least on a surface on a side opposite to the base material layer 51 for prevention of dissolution, corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more kinds thereof may be performed in combination. Not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. Note that the definition of the chemical conversion treatment may include these treatments. In a case where the barrier layer 52 is provided with the corrosion-resistant film, the barrier layer 52 is regarded as including the corrosion-resistant film.

The corrosion-resistant film exhibits the effects of preventing delamination between the barrier layer 52 (e.g. an aluminum alloy foil) and the base material layer 51 during molding of the outer package film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 included in the outer package film 50 is a layer that imparts a sealing property to the outer package film 50 by heat-sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 to 300 µm, more preferably 40 to 150 µm.

The outer package film 50 preferably includes one or more layers having a buffer function (hereinafter, referred to as "buffer layers") outside the heat-sealable resin layer 53, more preferably outside the barrier layer 52. The buffer layer may be layered outside the base material layer 51, and the base material layer 51 may also function as a buffer layer. In a case where the outer package film 50 includes a plurality of buffer layers, the plurality of buffer layers may lie side-by-side, or may be layered with the base material layer 51, the barrier layer 52, or the like interposed between the buffer layers.

The material constituting the buffer layer can be arbitrarily selected from materials having a cushioning property. The material having a cushioning property is, for example, rubber, a nonwoven fabric, or a foamed sheet. The rubber is, for example, natural rubber, fluororubber, or silicone rubber. The rubber hardness is preferably about 20 to 90. The material constituting a nonwoven fabric is preferably a material having excellent heat resistance. In a case where the buffer layer is formed from a nonwoven fabric, the lower limit value of the thickness of the buffer layer is preferably 100 µm, still more preferably 200 µm, still more preferably 1000 µm. In a case where the buffer layer is formed from a nonwoven fabric, the upper limit of the thickness of the buffer layer is preferably 5000 µm, still more preferably 3000 µm. The thickness of the buffer layer is preferably in the range of 100 µm to 5000 µm, 100 µm to 3000 µm, 200 µm to 5000 µm, 200 µm to 3000 µm, 1000 µm to 5000 µm, or 1000 µm to 3000 µm. The thickness of the buffer layer is most preferably in the range of 1000 µm to 3000 µm among these.

In a case where the buffer layer is formed from rubber, the lower limit value of the thickness of the buffer layer is preferably 0.5 mm. In a case where the buffer layer is formed from rubber, the upper limit of the thickness of the buffer layer is preferably 10 mm, still more preferably 5 mm, still more preferably 2 mm. In a case where the buffer layer is formed from rubber, the thickness of the buffer layer is preferably in the range of 0.5 mm to 10 mm, 0.5 mm to 5 mm, or 0.5 mm to 2 mm.

In a case where the outer package film 50 includes a buffer layer, the buffer layer functions as a cushion, so that breakage of the outer package film 50 due to the impact of falling of the electrical storage device 10 or handling during manufacturing of the electrical storage device 10 is suppressed.

The lid 60 includes a lid main body 70, a joining part 80, and a cover 90 covering a part of the lid main body 70. The lid 60 can be manufactured, for example, by injection molding the cover 90 with respect to the lid main body 70.

The lid main body 70 and the joining part 80 are configured to contain a conductive material. The phrase "configured to contain a conductive material" means that the content of the conductive material is 50 mass% or more, preferably 80 mass% or more, more preferably 90 mass% or more, and still more preferably 95 mass% or more when the total amount of materials constituting the lid main body 70 and the joining part 80 is defined as 100 mass%. In other words, the materials constituting the lid main body 70 and the joining part 80 can contain materials other than the conductive material in addition to the conductive material. The lid main body 70 and the joining part 80 preferably have the corrosion-resistant film described in the barrier layer 52.

The conductive material constituting the lid main body 70 and the joining part 80 is, for example, a metal material. The metal material constituting the lid main body 70 and the joining part 80 is, for example, aluminum, an aluminum alloy, nickel, copper, or a copper alloy. For example, in a case where the electrode assembly 20 is a lithium ion battery, the lid main body 70 and the joining part 80 connected to the positive electrode are preferably formed from aluminum or an aluminum alloy. The lid main body 70 and the joining part 80 connected to the negative electrode are preferably formed from nickel, copper, or a copper alloy. The material constituting the lid main body 70 and the joining part 80 connected to the negative electrode may be copper plated with nickel. The material constituting the lid main body 70 and the joining part 80 may include a recycled metal material. The lid main body 70 includes a base portion 71 and a cover portion 72.

The base portion 71 illustrated in Figs. 4 and 5 has, for example, a rectangular plate shape and has a first surface 71A and a second surface 71B. The first surface 71A faces the outside. The second surface 71B is a surface on a side opposite to the first surface 71A. The second surface 71B faces the electrode assembly 20.

The cover portion 72 is covered with the cover 90. The cover portion 72 has a frame shape standing from the first surface 71A of the base portion 71. The cover portion 72 includes a first cover portion 72A, a second cover portion 72B, and a third cover portion 72C. The first cover portion 72A forms the upper surface of the lid main body 70. The first cover portion 72A extends in a first direction (LR direction in the present embodiment) in front view of the lid main body 70. The second cover portion 72B and the third cover portion 72C are connected to the first cover portion 72A and form the lateral surfaces of the lid main body 70. The second cover portion 72B and the third cover portion 72C extend in a second direction (UD direction in the present embodiment) crossing the first direction in front view of the lid main body 70. In the present embodiment, the first direction and the second direction orthogonally cross each other in front view of the lid main body 70. The first direction and the second direction are not required to orthogonally cross each other in front view of the lid main body 70.

At least a part of a front surface 72X of the cover portion 72 is covered with the cover 90. In the present embodiment, the entire front surface 72X of the cover portion 72 is covered with the cover 90.

The joining part 80 is formed such that the current collector 30 of the electrode assembly 20 and the lid 60 can be easily joined. The shape of the joining part 80 can be arbitrarily selected as long as it is a shape that protrudes from the lid main body 70 toward the electrode assembly 20. In the present embodiment, the joining part 80 has a plate shape protruding in a first direction which is a direction from the second surface 71B of the base portion 71 toward the electrode assembly 20.

The lid main body 70 and the joining part 80 may be formed from the same conductive material or different conductive materials. At least one of the lid main body 70 and the joining part 80 may be formed from a partially different conductive material. The lid main body 70 and the joining part 80 may be integrally formed with each other, or may be separately formed and joined. In a case where the lid main body 70 and the joining part 80 are integrally formed, the lid main body 70 and the joining part 80 can be manufactured by, for example, machining, polishing, electrical discharge machining, cutting, pressing, casting, plastic machining, sintering, a 3D printer, or forging. In a case where the lid main body 70 and the joining part 80 are separately formed, the lid main body 70 and the joining part 80 may be joined by welding, fitting with unevenness, or caulking. The lid main body 70 and the joining part 80 can be manufactured by any method without being limited thereto.

The joining part 80 includes a first end part 81 and a second end part 82. The first end part 81 is one end part in the FB direction. The first end part 81 is connected to the lower surface of the base portion 71. The second end part 82 is the other end part in the FB direction. A portion including the first end part 81 of the joining part 80 is sandwiched between the second cover portion 72B and the third cover portion 72C.

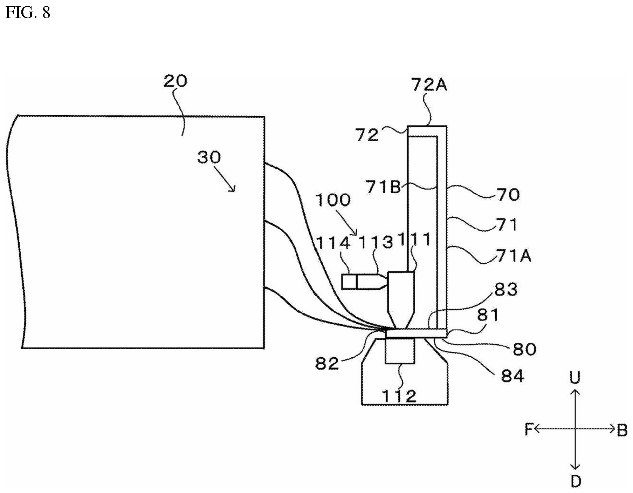

The joining part 80 is joined to the current collector 30 by, for example, ultrasonic joining. In the manufacturing processes of the electrical storage device 10, from the viewpoint of securing a wide space for disposing an apparatus 110 (see Fig. 8), the second end part 82 of the joining part 80 is preferably formed at a position not overlapping the lid main body 70 in plan view. The second end part 82 may be formed at a position separated from the outer package film 50. In a case where the second end part 82 is formed at a position separated from the outer package film 50, the second end part 82 and the outer package film 50 are less likely to come into contact with each other. Therefore, breakage of the outer package film 50 due to contact between the joining part 80 and the outer package film 50 is suppressed.

The joining part 80 has an upper surface 83 and a lower surface 84. The upper surface 83 is joined to the current collector 30. The current collector 30 may be joined to the lower surface 84. Of the upper surface 83 and the lower surface 84, a portion joined to at least the current collector 30 is preferably subjected to a surface treatment in order to be suitably joined to the current collector 30.

In the present embodiment, at least a part of the lower surface 84 is covered with the cover 90. The lower surface 84 is preferably joined to the outer package film 50 with the cover 90 interposed therebetween. A region of the lower surface 84 to be joined to the outer package film 50 can be arbitrarily selected. In the present embodiment, a part of the lower surface 84 and the outer package film 50 are joined. Substantially the entire lower surface 84 and the outer package film 50 may be joined. Note that, in a case where the lid 60 does not include the cover 90, the lid main body 70 and the joining part 80 may be joined to the outer package film 50 by an adhesive.

A thickness HA of the joining part 80 can be arbitrarily selected. In the outer packaging 40, the joining part 80 preferably has a thickness that can be easily bent, such that the position of the second end part 82 can be adjusted. Even in a case where an external force acts on the outer packaging 40, the joining part 80 preferably has a certain thickness such that the joining part 80 is not damaged. From such a viewpoint, the minimum value of the thickness HA of the joining part 80 is preferably, for example, 0.05 mm. The maximum value of the thickness HA of the joining part 80 is preferably, for example, 16 mm. A preferable range of the thickness HA of the joining part 80 is 0.05 mm to 16 mm. Note that the thickness HA of the joining part 80 may vary depending on a portion. In a case where the thickness HA of the joining part 80 varies depending on a portion, the thickness of the thickest portion is defined as the thickness HA of the joining part 80.

The cover 90 illustrated in Figs. 4 and 5 has a lid seal portion 91. The lid seal portion 91 is heat-sealed with the heat-sealable resin layer 53 of the outer package film 50. The lid seal portion 91 and the outer package film 50 may be joined by any method other than heat-sealing, for example, welding or the like. A specific welding method is, for example, any method in addition to laser welding or ultrasonic welding. The lid seal portion 91 includes a first seal surface 91A, a second seal surface 91B, a third seal surface 91C, and a fourth seal surface 91D. The first seal surface 91A forms the upper surface of the lid 60. The first seal surface 91A is formed on the first cover portion 72A. The first seal surface 91A extends in the first direction (LR direction in the present embodiment) in front view of the lid 60. The second seal surface 91B and the third seal surface 91C are connected to the first seal surface 91A and form the lateral surfaces of the lid 60. The second seal surface 91B is formed on the second cover portion 72B. The third seal surface 91C is formed on the third cover portion 73C. The second seal surface 91B and the third seal surface 91C extend in a second direction (UD direction in the present embodiment) crossing the first direction in front view of the lid 60. In the present embodiment, the first direction and the second direction orthogonally cross each other in front view of the lid 60. The first direction and the second direction are not required to orthogonally cross each other in front view of the lid 60. The fourth seal surface 91D forms the lower surface of the lid 60. The fourth seal surface 91D extends in the first direction (LR direction in the present embodiment) in front view of the lid 60. The fourth seal surface 91D is formed on the lower surface 84 of the joining part 80.

The lid seal portion 91 further includes boundaries 92, 93, 94, and 95. The boundary 92 is a boundary between the first seal surface 91A and the second seal surface 91B. The boundary 93 is a boundary between the first seal surface 91A and the third seal surface 91C. The boundary 94 is a boundary between the fourth seal surface 91D and the second seal surface 91B. The boundary 95 is a boundary between the fourth seal surface 91D and the third seal surface 91C. The shapes of the boundaries 92 to 95 may be angular, or may be rounded off by R processing. In the present embodiment, the boundaries 92 to 95 are angular.

The cover 90 is configured to contain a resin material. Here, "configured to contain a resin material" means that the content of the resin material is 50 mass% or more, preferably 80 mass% or more, more preferably 90 mass% or more, and still more preferably 95 mass% or more when the total amount of materials constituting the cover 90 is defined as 100 mass%. In other words, the materials constituting the cover 90 can contain materials other than the resin material in addition to the resin material.

Specific examples of the resin include resins such as polyester, polyolefin, polyamide, an epoxy resin, an acrylic resin, a fluororesin, polyurethane, a silicone resin, and a phenol resin, and thermoplastic resins such as modified products of these resins. The resin material may be a mixture of these resins, a copolymer of these resins, or a modified product of the copolymer. Among them, the resin material is preferably a heat-sealable resin such as polyester or polyolefin, and more preferably polyolefin. In a case where the resin material is a resin, the cover 90 may be molded by any molding method.

The resin material contained in the material constituting the cover 90 is preferably an olefin-based random copolymer, more preferably contains a resin containing a polyolefin backbone as a main component, still more preferably contains a polyolefin as a main component, and still more preferably contains polypropylene as a main component. The polyolefin may be an acid-modified polyolefin. The resin material contained in the material constituting the cover 90 preferably contains a plurality of kinds of amide-based slipping agents. In the resin material contained in the material constituting the cover 90, it is preferable that the plurality of amide-based slipping agents further contain an unsaturated fatty acid amide in addition to the saturated fatty acid amide. The resin material contained in the material constituting the cover 90 may be a polyolefin resin to which a propylene-based elastomer having a melting point higher than 150°C is added.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate), and polyethylene(terephthalate/decane dicarboxylate). Among these, the resin material is preferably polybutylene terephthalate from the viewpoint of enhancing heat resistance and pressure resistance.

Specific examples of polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (for example, block copolymers of propylene and ethylene) and random copolymers of polypropylene (for example, random copolymers of propylene and ethylene); propylene-α-olefin copolymers; and terpolymers of ethylene-butene-propylene. The polyolefin resin in the case of a copolymer may be a block copolymer or a random copolymer. Among them, the resin material is preferably polypropylene because it is excellent in heat-sealability and electrolytic solution resistance.

The resin as the resin material may contain a filler as necessary. Specific examples of the filler include glass beads, graphite, glass fiber, and carbon fiber. By the resin as the resin material containing the filler, deformation resistance of the cover 90 against a temperature change can be improved.

The melt mass flow rate of the resin material contained in the material constituting the cover 90 is preferably in the range of 1 g/10 min to 100 g/10 min, and more preferably in the range of 5 g/10 min to 80 g/10 min. The melt mass flow rate is measured on the basis of JIS K7210-1:2014. The measurement temperature for melt mass flow rate is 230°C.

In the lid 60, the lid main body 70 may be configured to contain a resin material. In a case where the lid main body 70 is configured to contain a resin material, the cover 90 may be omitted. In a case where the lid main body 70 is configured to contain a resin material, an electrode terminal is preferably joined to the lid main body 70. The electrode terminal is joined to the current collector 30.

The lid 60 may be joined to the outer package film 50 with an adhesive film interposed therebetween, instead of the cover 90. The adhesive film can be arbitrarily selected as long as it is a film capable of bonding the outer package film 50 and the lid 60. The adhesive film is preferably a multilayer film including at least a heat-sealable resin layer, a heat-resistant base material layer and a heat-sealable resin layer in the stated order. As specifications about the heat-sealable resin layer of the adhesive film, specifications about the heat-sealable resin layer 53 can be applied. As materials for forming the heat-sealable resin layers on both sides of the adhesive film, the same material or different materials may be used, and materials that match the material for forming the heat-sealable resin layer 53 of the outer package film 50 and the material for forming the lid 60 are appropriately selected. The material for forming the heat-sealable resin layer of the adhesive film, which is bonded to the lid 60, is preferably an acid-modified polyolefin-based resin obtained by graft modification with an acid such as maleic anhydride. For the heat-sealable resin layer of the adhesive film, which is bonded to the outer package film 50, the same material as that for forming the heat-sealable resin layer 53 of the outer package film 50 is preferably used.

For the heat-resistant base material layer, any film may be used as long as it is formed from a heat-resistant resin, and examples thereof include non-stretched or stretched films of polyethylene terephthalate, polyethylene naphthalate, polyphenylene sulfide, polymethylpentene (registered trademark), polyacetal cyclic polyolefin, polyethylene, polypropylene and the like. Note that polyethylene terephthalate is particularly preferable because it is inexpensive and has high strength.

The adhesive film preferably has adhesion. When the second seal portion 100B, which will be described later, is formed in a state where the adhesive film is disposed between the outer package film 50 and the lid 60, the position of the adhesive film with respect to the lid 60 and the outer package film 50 is unlikely to deviate. By incorporating an adhesion-imparting resin into the heat-sealable resin layer of the adhesive film, adhesion can be imparted to the adhesive film. Examples of the adhesion-imparting resin include amorphous polyolefins. Examples of the amorphous polyolefin include amorphous polypropylene, and copolymers of amorphous propylene and another α-olefin. The content of the adhesion-imparting resin with respect to the parent material constituting the heat-sealable resin is preferably 10 to 20 wt% or less.

In a case where the lid 60 has a plate shape, the lid 60 is preferably thick to some extent to suppress deformation of the outer packaging 40 even in a case where electrical storage devices 10 are stacked on one another. From another viewpoint, in a case where the lid 60 has a plate shape, the lid seal portion 91 of the lid 60 is preferably thick in the FB direction to some extent such that the lid seal portion 91 of the lid 60 and the outer package film 50 can be suitably heat-sealed when the second seal portion 100B described later is formed. The minimum value of the thickness of the lid seal portion 91 of the lid 60 is, for example, 1.0 mm, more preferably 3.0 mm, still more preferably 4.0 mm. The maximum value of the thickness of the lid seal portion 91 of the lid 60 is, for example, 20 mm, more preferably 15 mm, still more preferably 10 mm. The maximum value of the thickness of the lid seal portion 91 of the lid 60 may be 20 mm or more. The thickness of the lid seal portion 91 of the lid 60 is preferably in the range of 1.0 mm to 20 mm, 1.0 mm to 15 mm, 1.0 mm to 10 mm, 3.0 mm to 20 mm, 3.0 mm to 15 mm, 3.0 mm to 10 mm, 4.0 mm to 20 mm, 4.0 mm to 15 mm, or 4.0 mm to 10 mm. In the present embodiment, in a case where the lid 60 is described as having a plate shape, an aspect in which the lid 60 is formed only from the film specified by Japanese Industrial Standard (JIS), [Packaging Terminology] Standard is not included. Note that the thickness of the lid seal portion 91 of the lid 60 may vary depending on a portion of the lid 60. In a case where the thickness of the lid seal portion 91 of the lid 60 varies depending on a portion, the thickness of the thickest portion is defined as the thickness of the lid seal portion 91 of the lid 60.

In the present embodiment, mutually facing surfaces (heat-sealable resin layer 53) of the outer package film 50 are heat-sealed in a state where the outer package film 50 is wound around the electrode assembly 20 to thereby form a first seal portion 100A.

The first seal portion 100A is formed by heat-sealing a portion including a first edge 50A and a portion including a second edge 50B in the outer package film 50 illustrated in Fig. 3. The first seal portion 100A extends in a longitudinal direction of the outer packaging 40. In the outer packaging 40, a position at which the first seal portion 100A is formed can be arbitrarily selected. In the present embodiment, a root 70X of the first seal portion 100A is preferably located on an edge 43 of a boundary between a first surface 41 and a second surface 42 of the outer packaging 40. The first surface 41 has a larger area than the second surface 42. The root 100AX of the first seal portion 100A may be located on an arbitrary surface of the outer packaging 40. In the present embodiment, the first seal portion 100A protrudes further outward than the electrode assembly 20 in plan view. The first seal portion 100A may be folded toward the second surface 42 of the outer packaging 40, or may be folded toward the first surface 41, for example.

In the present embodiment, the second seal portion 100B (lid seal portion 100B) is formed by heat-sealing the heat-sealable resin layer 53 of the outer package film 50 and the lid seal portion 91 of the lid 60. Hereinafter, the sealing strength (joining strength) between the heat-sealable resin layer 53 of the outer package film 50 and the lid seal portion 91 of the lid 60 may be referred to as sealing strength of the second seal portion 100B. Note that the sealing strength of the second seal portion 100B is the sealing strength between the heat-sealable resin layer 53 and the lid 60 in the long-side portion of the lid seal portion 91, that is, the lid seal portion 91 extending in the LR (width) direction in Fig. 1A.

The sealing strength of the second seal portion 100B is measured as follows. First, a notch is formed at a part of the outer package film 50 constituting the first surface 41 of the outer packaging 40, and three strip-shaped members 41X, 41Y, and 41Z (see the two-dotted chain line in Fig. 1B) aligned in the LR direction are formed. The widths of the three strip-shaped members 41X, 41Y, and 41Z in the LR direction are 15 mm. End parts of the strip-shaped members 41X, 41Y, and 41Z are joined to the lid 60 at the second seal portion 100B. The length of the lid 60 in the LR direction is 45 mm or more. Next, the sealing strength of each of the strip-shaped members 41X, 41Y, and 41Z is measured by pulling the end part opposite to the end parts of the strip-shaped members 41X, 41Y, and 41Z joined to the lid 60 upward in the UD direction (direction opposite to the first surface 41B). The distance between chucks in the UD direction is 10 mm. The sealing strength of each of the strip-shaped members 41X, 41Y, and 41Z is a peak value of the sealing strength of each of the strip-shaped members 41X, 41Y, and 41Z. In the present embodiment, the sealing strength of the second seal portion 100B is an average value of the sealing strengths of the strip-shaped members 41X, 41Y, and 41Z. In a case where the length of the lid 60 in the LR direction is less than 45 mm, three strip-shaped members having an arbitrary width X mm, which is less than 15 mm, are formed, and the sealing strength of the three strip-shaped members is measured by a method similar to that adopted when the length of the lid 60 in the LR direction is 45 mm or more. Each obtained sealing strength is divided by an arbitrary width X mm and multiplied by 15 to be converted into the sealing strength of the three strip-shaped members at the width of 15 mm. The sealing strength of the second seal portion 100B is an average value of the sealing strengths of the three strip-shaped members converted into a width of 15 mm. Note that the sealing strength of the second seal portion 100B in a case where the lid 60 is divided into a plurality of parts including long sides and short sides is the sealing strength at the long-side portion of the lid seal portion 91 of the plurality of parts.

From the viewpoint of suitably maintaining the state where the electrode assembly 20 is sealed with the outer packaging 40, the sealing strength of the second seal portion 100B is preferably 40 N/15 mm or more, more preferably 50 N/15 mm or more, still more preferably 60 N/15 mm or more, still more preferably 70 N/15 mm or more, still more preferably 85 N/15 mm or more. In a case where the sealing strength of the second seal portion 100B is 40 N/15 mm or more, the state where the electrode assembly 20 is sealed with the outer packaging 40 is suitably maintained even when the electrical storage device 10 is used for, for example, several years (less than 10 years). In a case where the sealing strength of the second seal portion 100B is 85 N/15 mm or more, the state where the electrode assembly 20 is sealed with the outer packaging 40 is suitably maintained even when the electrical storage device 10 is used for, for example, 10 years or more. The sealing strength of the second seal portion 100B is preferably 300 N/15 mm or less. The sealing strength of the second seal portion 100B is preferably in the range of 40 N/15 mm to 300 N/15 mm, 50 N/15 mm to 300 N/15 mm, 60 N/15 mm to 300 N/15 mm, 70 N/15 mm to 300 N/15 mm, or 85 N/15 mm to 300 N/15 mm.

In the present embodiment, the lid 60 preferably has a protrusion 96 protruding from the lid seal portion 91 so that a gap is hardly formed between the outer package film 50 and the lid 60. The protrusion 96 may be formed integrally with the cover 90, or may be formed separately from the cover 90 and joined to the cover 90. In the present embodiment, the protrusion 96 is formed integrally with the cover 90. In the lid seal portion 91, a position at which the protrusion 96 is formed can be arbitrarily selected. A gap between the outer package film 50 and the lid 60 is likely to be formed, for example, between the root 100AX of the first seal portion 100A and the lid 60. In particular, in a case where the root 100AX of the first seal portion 100A is located at the boundaries 92 to 95 of the lid 60, ease of filling resin between the root 100AX of the first seal portion 100A and the lid 60 is likely to deteriorate. Therefore, it is preferable that the protrusion 96 is formed at a position at which the root 100AX of the first seal portion 100A is located in the lid seal portion 91. In the present embodiment, the root 100AX of the first seal portion 100A is located at the boundary 92 of the lid 60. Therefore, it is preferable that the protrusion 96 is formed at the boundary 92 in the lid seal portion 91. In the present embodiment, the first seal portion 100A is sealed with the protrusion 96 sandwiched therein. Note that the protrusion 96 may be formed on at least one of the first seal surface 91A, the second seal surface 91B, the third seal surface 91C, the fourth seal surface 91D, the boundary 93, the boundary 94, and the boundary 95.

The shape of the protrusion 96 can be arbitrarily selected. In the present embodiment, the protrusion 96 has a plate shape. The thickness of the protrusion 96 can be arbitrarily selected. In the present embodiment, the thickness of the protrusion 96 decreases with increasing distance from the boundary 92. In other words, the protrusion 96 is tapered with increasing distance from the boundary 92. The thickness of the protrusion 96 may be constant, or may increase with increasing distance from the boundary 92.

A direction in which the protrusion 96 extends can be arbitrarily selected. In the present embodiment, the protrusion 96 extends along the first direction (LR direction in the present embodiment). The protrusion 96 may extend along the second direction (UD direction in the present embodiment). The protrusion 96 may extend in the first direction (LR direction in the embodiment) and a third direction crossing the second direction (UD direction in the embodiment) in front view of the lid 60.

The length of the protrusion 96 can be arbitrarily selected as long as it is equal to or less than the length of the first seal portion 100A. For example, the length of the protrusion 96 may be substantially equal to the length of the first seal portion 100A, or may be 30% to 50% of the length of the first seal portion 100A.

### <1-2. Method for manufacturing electrical storage device>

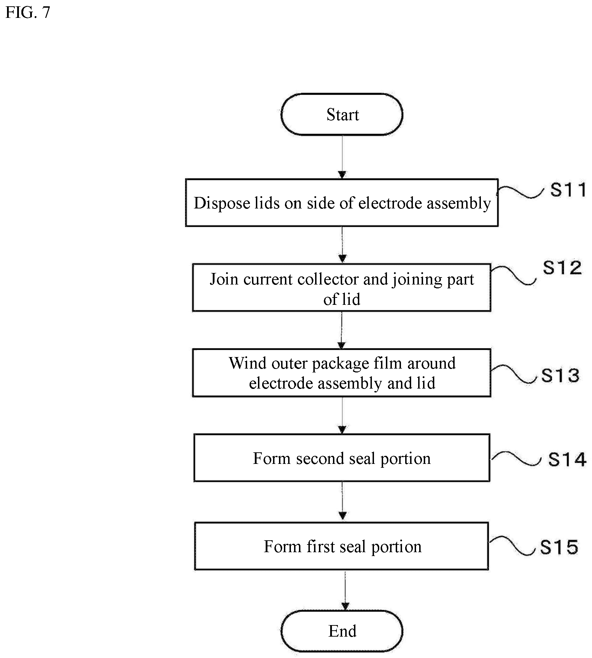

Fig. 7 is a flowchart illustrating an example of a method for manufacturing the electrical storage device 10. The method for manufacturing the electrical storage device 10 includes, for example, a first step, a second step, a third step, a fourth step and a fifth step. The first to fifth steps are carried out by, for example, a manufacturing apparatus of the electrical storage device 10. At least a part of the first to fifth steps may be carried out by an operator. Note that the first to fifth steps are merely convenient labels for the steps in the method for manufacturing the electrical storage device 10 and do not necessarily mean the order of the steps. The order of the first to fifth steps can be arbitrarily changed as long as there is no technical contradiction.

In the first step in step S11, the manufacturing apparatus disposes a pair of lids 60 on the sides of the electrode assembly 20 in the FB direction.

The second step in step S12 is carried out after the first step. In the second step, the manufacturing apparatus joins the current collector 30 and the joining part 80 of the lid 60. Note that in a case where the lid main body 70 and the joining part 80 are separately formed, the joining part 80 and the lid main body 70 may be joined after the current collector 30 and the joining part 80 are joined.

Fig. 8 is a diagram relating to a second step. In the present embodiment, in the second step, the current collector 30 and the joining part 80 are joined by ultrasonic joining. The current collector 30 and the joining part 80 may be joined by resistance welding or laser welding. Ultrasonic joining is performed using the apparatus 110. The apparatus 110 is a known ultrasonic apparatus, and includes a chip 111, an anvil 112, a horn 113, and an oscillator 114. In the second step, the current collector 30 and the joining part 80 are ultrasonically joined in a state where a portion including the upper surface 83 and the lower surface 84 of the joining part 80 and the end part 31 of the current collector 30 is sandwiched between the chip 111 and the anvil 112.

The third step in step S13 is carried out after the second step. In the third step, the manufacturing apparatus winds the outer package film 50 around the electrode assembly 20 and the lid 60 with tension applied to the outer package film 50 while controlling the movement of the electrode assembly 20 and the lid 60 by a restriction means. The restriction means is, for example, a groove into which the electrode assembly 20 and the lid 60 are fitted. The restriction means may be an apparatus that applies an external force to the electrode assembly 20 and the lid 60 so that the electrode assembly 20 and the lid 60 do not move. The restriction means may be an apparatus that applies a force to the electrode assembly 20 and the lid 60 in a direction opposite to a direction in which the outer package film 50 is pulled. Note that the restriction means may include a roller for removing wrinkles of the outer package film 50 by running on the outer package film 50 with the outer package film 50 being pulled. Note that the electrode assembly 20 may be housed inside the outer package film 50 configured into a tubular shape such that the opening parts are formed at both end parts in the FB direction, and the opening part may be closed by the lid 60 after the current collector 30 and the joining part 80 are joined. In still another example, the electrode assembly 20 in a state of being connected to the joining part 80 of the lid 60 may be housed inside the outer package film 50 configured into a tubular shape such that the opening parts are formed at both end parts in the FB direction, and the opening part may be closed by the lid 60.

The fourth step in step S14 is carried out after the third step. In the fourth step, the manufacturing apparatus forms the second seal portion 110B by heat-sealing the outer package film 50 and the lid 60.

The fifth step in step S15 is carried out before or after the fourth step. In the fifth step, the manufacturing apparatus forms the first seal portion 100A by heat-sealing the heat-sealable resin layer 53 in a portion including the first edge 50A of the outer package film 50 and the heat-sealable resin layer 53 in a portion including the second edge 50B, where the heat-sealing is performed with tension applied to the outer package film 50 while the movement of the electrode assembly 20 and the lid 60 is restricted.

### <1-3. Action and effect of electrical storage device>

According to the electrical storage device 10, since the joining part 80 is provided, a space for disposing the apparatus 110 for joining the current collector 30 and the lid 60 can be easily secured in the manufacturing process of the electrical storage device 10. Therefore, the current collector 30 and the lid 60 can be suitably joined.

### [2. Modifications]

The above-described embodiment is an example of possible forms of an electrical storage device, a lid and a method for manufacturing an electrical storage device according to the present invention, and is not intended to limit the forms thereof. The electrical storage device, the lid and the method for manufacturing an electrical storage device according to the present invention may have a form different from that exemplified in the embodiment. An example thereof is a form in which a part of the configuration of the embodiment is replaced, changed or omitted, or a form in which a new configuration is added to the embodiment. Some examples of modifications of the embodiment will be described below. Note that the following modifications can be combined as long as they are not technically contradictory.

### <2-1. First modification>

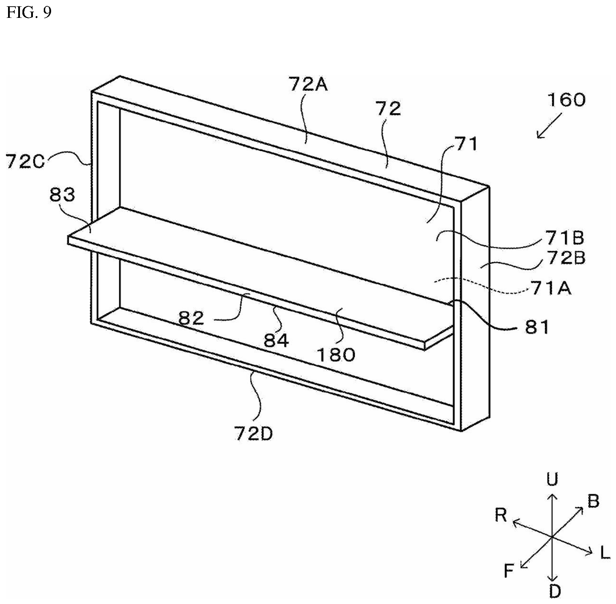

In the above-described embodiment, the position at which the joining part 80 of the lid 60 is formed can be arbitrarily changed. Fig. 9 is a perspective view of a lid 160 included in an electrical storage device 10 of a first modification. The lid 160 includes a joining part 180. The first end part 81 of the joining part 180 may be connected to at least the lid main body 70. In the example illustrated in Fig. 9, the cover portion 72 preferably includes the fourth cover portion 72D. The fourth cover portion 72D forms the lower surface of the lid main body 70. The fourth cover portion 72D is connected to the second cover portion 72B and the third cover portion 72C. The fourth cover portion 72D extends in the first direction (LR direction in the present embodiment) in front view of the lid 160. In a case where the cover portion 72 includes the fourth cover portion 72D, since the lower surface 84 of the joining part 180 does not need to be covered with the cover 90, the second end part 82 may be formed at a position separated from the outer package film 50. In a case where the second end part 82 is formed at a position separated from the outer package film 50, the second end part 82 and the outer package film 50 are less likely to come into contact with each other. Therefore, breakage of the outer package film 50 due to contact between the joining part 80 and the outer package film 50 is suppressed.

### <2-2. Second modification>

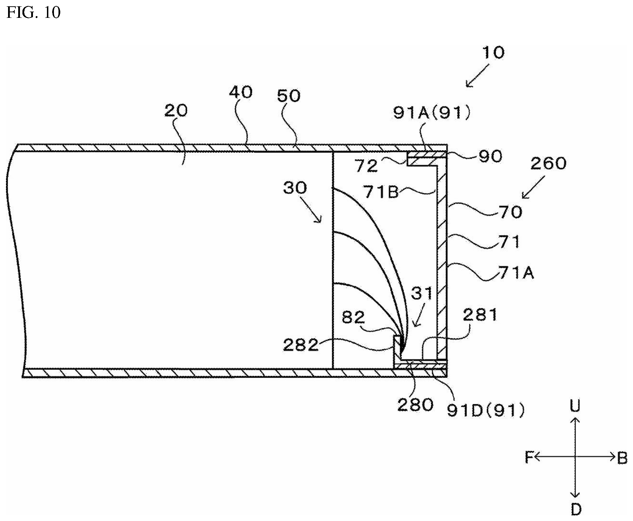

In the above-described embodiment, the shape of the joining part 80 can be arbitrarily changed. Fig. 10 is a sectional view of an electrical storage device 10 of a second modification. The electrical storage device 10 of the second modification includes a lid 260. The lid 260 includes a joining part 280. The joining part 280 includes a first part 281 and a second part 282. The first part 281 is connected to the lid main body 70 and extends in a first direction toward the electrode assembly 20. In the example illustrated in Fig. 10, the first direction is the FB direction. The second part 282 is connected to the first part 281, and extends in a second direction intersecting the first direction in side view of the lid 60. In the example illustrated in Fig. 10, the second direction is the UD direction. An angle formed by the first direction and the second direction is included in a range of more than 0° and less than 180°. In the example illustrated in Fig. 10, the angle formed by the first direction and the second direction is 90°. In the second modification, the second part 282 of the joining part 280 and the current collector 30 are joined.

The first part 281 and the second part 282 may be integrally formed, or may be separately formed and joined. In the second modification, the first part 281 and the second part 282 are integrally formed. More specifically, in the second modification, the first part 281 and the second part 282 are formed by bending one joining part 280. In the second modification, since the joining part 280 has a thickness to the extent of being bent, the joining part 280 has flexibility. Therefore, even in a case where an external force such as vibration acts on the electrical storage device 10, the joining part 280 is hardly damaged. In other words, the joining part 280 has high durability. Since the joining part 280 extends in the second direction, the size of the electrical storage device 10 in the FB direction can be reduced as compared with a configuration in which the joining part extends in the first direction as a whole. Since the second end part 82 is formed at a position separated from the outer package film 50, the second end part 82 and the outer package film 50 are less likely to come into contact with each other. Therefore, breakage of the outer package film 50 due to contact between the joining part 280 and the outer package film 50 is suppressed.

### <2-3. Third modification>

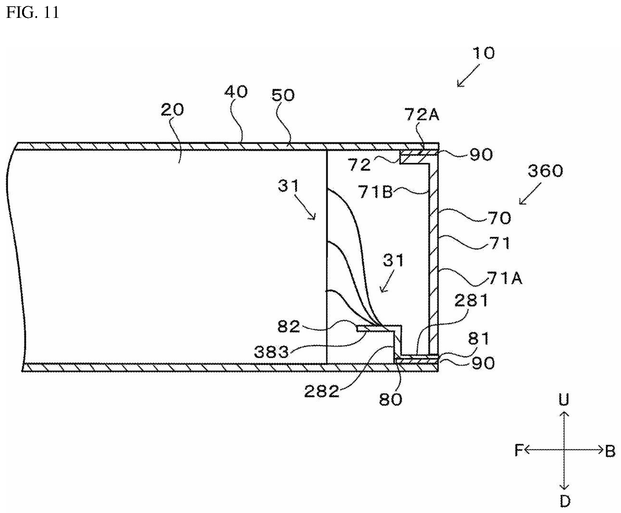

Fig. 11 is a sectional view of an electrical storage device 10 of a third modification which is another modification of the second modification. The electrical storage device 10 of the third modification includes a lid 360. The lid 360 includes a joining part 380. The joining part 380 includes a third part 383 in addition to the first part 281 and the second part 282 of the second modification. The third part 383 is connected to the second part 282 and extends in a first direction toward the electrode assembly 20. In the example illustrated in Fig. 11, the first direction is the FB direction. The first part 281, the second part 282, and the third part 383 may be integrally formed, or at least two thereof may be separately formed and joined. In the third modification, the first part 281, the second part 282, and the third part 383 are integrally formed. More specifically, in the third modification, the first part 281, the second part 282, and the third part 383 are formed by bending one joining part 380. Also in the electrical storage device 10 of the third modification, the same effect as that of the electrical storage device 10 of the second modification can be obtained.

### <2-4. Fourth modification>

In the above-described embodiment, the cover portion 72 may be omitted from the lid main body 70. In the fourth modification, the lateral surface (edge) of the base portion 71 may be covered with the cover 90. In the fourth modification, the first end part 81 of the joining part 80 may be connected to the second surface 71B of the base portion 71, or may be connected to the lateral surface of the base portion 71.

### <2-5. Fifth modification>

In the above-described embodiment, the outer package film 50 of the electrical storage device 10 may protrude further outward than at least one of the two lids 60 in the FB direction. The electrode assembly 20 is sealed by the part of the outer package film 50 protruding further outward than the lid 60 being closed. The part of the outer package film 50 protruding further outward than the lid 60 may be folded like a gable top pouch or a brick-shaped pouch. In the fifth modification, the electrode terminal is preferably joined to the second surface 71B of the lid 60. The length of the electrode terminal in the FB direction is preferably such a length that the electrode terminal is exposed from the part of the outer package film 50 protruding further outward than the lid 60.

### <2-6. Sixth modification>

In the above-described embodiment, the outer packaging 40 is not required to include one of the two lids 60. In this modification, the electrode assembly 20 is sealed by the part of the outer package film 50 protruding further outward than the electrode assembly 20 being closed at the part of the outer packaging 40 from which the lid 60 is omitted in the FB direction. The part of the outer package film 50 protruding further outward than the electrode assembly 20 may be folded like a gable top pouch or a brick-shaped pouch.

### <2-7. Seventh modification>

In the above-described embodiments, the outer contour shape of the outer packaging 40 can be arbitrarily changed. The outer contour shape of the outer packaging 40 may be a cylinder, a prism, or a cube.

### Reference Signs List

10 Electrical storage device
20 Electrode assembly
30 Current collector
40 Outer packaging
50 Outer package film
60, 260, 360 Lid
70 Lid main body
80, 280, 380 Joining part
81, 181 First end part
82, 182 Second end part
281 First part
282 Second part

## Claims

1. An electrical storage device comprising:
an electrode assembly including a current collector;
an outer package film that wraps the electrode assembly; and
a lid that is configured to contain a conductive material and seals the electrode assembly together with the outer package film; wherein
the lid includes:
a lid main body; and
a joining part that protrudes from the lid main body toward the electrode assembly and is joined to the current collector.

2. The electrical storage device according to claim 1, wherein the lid main body is joined to the outer package film.

3. The electrical storage device according to claim 1 or 2, wherein an end part of the joining part on a side opposite to the lid main body is separated from the outer package film.

4. The electrical storage device according to claim 1 or 2, wherein the joining part includes:
a first part that is connected to the lid main body and extends in a first direction toward the electrode assembly; and
a second part that is connected to the first part and extends in a second direction intersecting the first direction in side view of the lid.

5. A lid used as an outer packaging of an electrical storage device, the lid comprising:
a lid main body; and
a joining part that protrudes from the lid main body and is connected to a current collector of the electrical storage device.

6. The lid according to claim 5, wherein the joining part includes:
a first part that is connected to the lid main body and extends in a first direction toward an electrode assembly of the electrical storage device; and
a second part that is connected to the first part and extends in a second direction intersecting the first direction in side view of the lid.

7. A method for manufacturing an electrical storage device, the electrical storage device including:
an electrode assembly including a current collector;
an outer package film that wraps the electrode assembly; and
a lid that is configured to contain a conductive material and seals the electrode assembly together with the outer package film,
the lid including:
a lid main body; and
a joining part that protrudes from the lid main body toward the electrode assembly and is joined to the current collector, the method comprising
a step of joining the joining part and the current collector.
